# EUROPEAN PATENT SPECIFICATION

(11) **EP 2 626 787 B1**
(45) Date of publication and mention of the grant of the patent: **03.09.2014**
(21) Application number: 13154229.2
(22) Date of filing: 06.02.2013
(51) Int. Cl.: G06F 11/16

(54) **Data comparison apparatus, data comparison method and safety system using the same**
Datenvergleichsvorrichtung, Datenvergleichsverfahren und Sicherheitssystem damit
Appareil de comparaison de données, procédé de comparaison de données et système de sécurité l'utilisant

(30) Priority: 07.02.2012 JP 2012024235
(43) Date of publication of application: 14.08.2013
(73) Proprietor: Hitachi Ltd., Tokyo 100-8280 (JP)
(72) Inventor: Katsuta, Keiichi, Chiyoda-ku, Tokyo 100-8220 (JP); Maekawa, Keiji, Chiyoda-ku, Tokyo 100-8220 (JP); Shibata, Naoki, Chiyoda-ku, Tokyo 100-8220 (JP); Imamoto, Kenji, Chiyoda-ku, Tokyo 100-8220 (JP); Kanekawa, Nobuyasu, Chiyoda-ku, Tokyo 100-8220 (JP); Watanabe, Dai, Chiyoda-ku, Tokyo 100-8220 (JP)
(74) Representative: Gill, Stephen Charles

(56) References cited:
- EP-A2- 0 176 464
- EP-A2- 0 653 708
- US-A1- 2007 283 061
- US-A1- 2011 254 602

## Description

### BACKGROUND OF THE INVENTION

### Field of the Invention

The present invention relates to data comparison apparatus, a data comparison method and a safety system using the same. In particular, it relates to a data comparison apparatus, a data comparison method and a safety system that can be used in a railway signaling system, such as a train control system (an automatic train protection system (ATP) or an automatic train control system (ATC)) and an interlocking system.

### Description of the Related Art

Japanese patent laid-Open Publication No. 5-120047 (Patent Document 1) discloses a related art. In this publication, a description is found that "a clock synchronization type 2-out-of-2 system is a system that ensures high reliability and safety in a computer-based control system".

In Patent Document 1, a mechanism used in a computer-based control system with high safety is described that has two CPUs and a failsafe comparison circuit that detects a fault of the CPUs by checking whether the data output from the CPUs are matched or unmatched. However, the clock synchronization type 2-out-of-2 system described in Patent Document 1 cannot precisely compare the data sent from the two CPUs when the data are out of synchronization.

The circuit can hardly precisely detect a fault of the CPUs if the data output from the two CPUs are not in perfect synchronization with each other, such as when the two CPUs operate on independent clocks or when the two CPUs are of different types.

An object of the present invention is to provide a data comparison apparatus that can detect a synchronization loss between data sent from at least two CPUs and adjust the comparison timing to compare the data, a data comparison method therefor and a safety system using the same.

US 2011/0254602 proposes a method and circuit for synchronizing a first circuit and a second circuit.

### SUMMARY OF THE INVENTION

Accordingly, a first aspect of the present invention provides a data comparison apparatus according to claim 1.

A second aspect of the present invention provides a safety system according to claim 6.

A third aspect of the present invention provides a data comparison method according to claim 12.

The present invention provides a data comparison apparatus that can detect a synchronization loss between data sent from a plurality of data sources and adjust the comparison timing to compare the data, a data comparison method therefor and a safety system using the same. Other problems, configurations and advantages than those described above will be apparent from the following description of the embodiments.

### BRIEF DESCRIPTION OF THE DRAWINGS

FIG. 1 is a diagram showing an example of a configuration of a data comparison apparatus according to a comparative example 1;
FIG. 2 is a diagram showing an example of a configuration of a safety system according to a comparative example 2;
FIG. 3 is a diagram showing an example of a configuration of a safety system according to an embodiment 1 of the present invention that can prevent latency of a failure in an apparatus; and
FIG. 4 is a diagram showing an example of orthogonal functions and a comparison result signal of the safety system according to the embodiment 1 of the present invention that can prevent latency of a failure in an apparatus.

### DETAILED DESCRIPTION OF THE PREFERRED EMBODIMENTS

In the following, comparative examples and embodiments of the present invention will be described with reference to the drawings.

### Comparative example 1

A comparative example 1 described below concerns an example of a data comparison apparatus that can detect a synchronization loss between data sent from a plurality of data sources and adjust the comparison timing to compare the data.

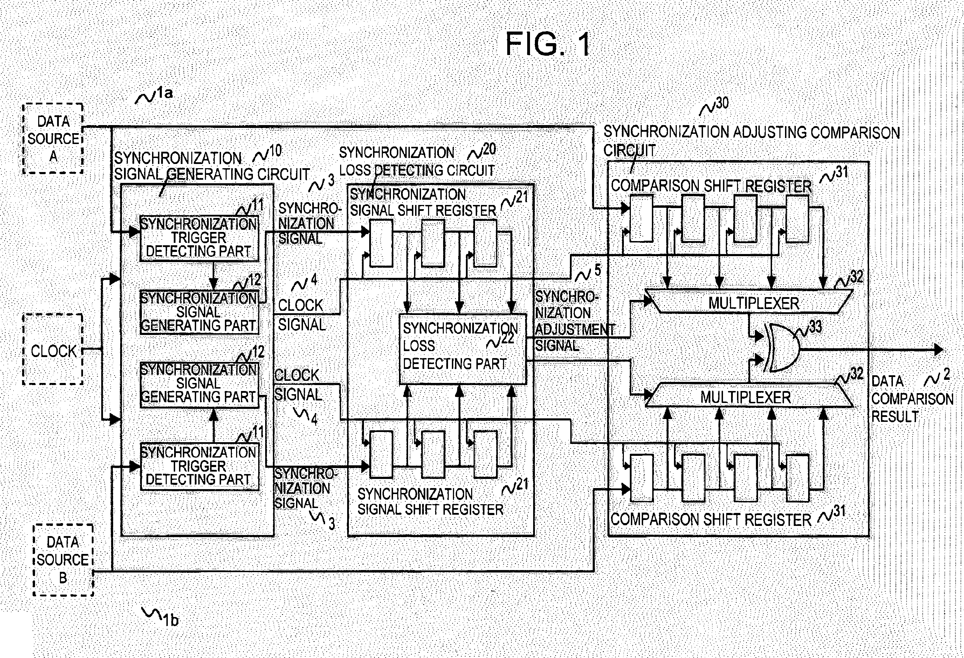

FIG. 1 is a diagram showing an example of a configuration of the data comparison apparatus according to the comparative example 1. The data comparison apparatus according to this comparative example comprises a synchronization signal generating circuit 10, a synchronization loss detecting circuit 20 and a synchronization adjusting comparison circuit 30 and is designed to compare data sent from two data sources that can be out of synchronization.

The synchronization signal generating circuit 10 comprises a synchronization trigger detecting part 11 and a synchronization signal generating part 12 for each data source.

The synchronization trigger detecting part 11 detects any particular input bit string in data 1a or 1b input from the associated data source and informs the associated synchronization signal generating part 12 that the particular bit string is input from the data source.

The particular bit string may be any bit string that complies with the transmission protocol of the data sent from the data source, such as a start bit used in the short-stop synchronization system and a preamble used in Ethernet (registered trademark). A clock signal having a sufficiently short period is needed to detect a trigger. The clock signal may be externally input or generated by an.internal clock.

If the synchronization signal generating part 12 is informed by the synchronization trigger detecting part 11 that the particular bit string is input from the data source, the synchronization signal generating part 12 generates a synchronization signal 3 and transmits the synchronization signal 3 to the synchronization loss detecting circuit 20. The synchronization signal 3 may be any signal that can be used for observation of a synchronization loss, such as an M-sequence signal.

Furthermore, the synchronization signal generating circuit 10 generates a clock signal 4 having a sufficiently short period for comparison of the synchronization signals 3 or adjustment of the comparison timing and provides the clock signal 4 to the synchronization loss detecting circuit 20 and the synchronization adjusting comparison circuit 30.

The synchronization loss detecting circuit 20 comprises a synchronization signal shift register 21 for each data source, and a synchronization loss detecting part 22 that compares the synchronization signals 3 from the synchronization signal shift registers 21.

The synchronization signal shift register 21 stores the synchronization signal 3 for the associated data source input from the synchronization signal generating circuit 10.

The synchronization loss detecting part 22 detects a synchronization loss between the data 1a and 1b sent from the data sources by comparing the synchronization signals 3 stored in the synchronization signal shift registers 21 in terms of specific characteristics thereof. For example, in the case where the synchronization signals 3 are M-sequence signals "1001110" having a period of 7, a synchronization loss between the signals can be detected by comparing three bits at the same time. When the three bits of one synchronization signal are 100, it can be detected that a 1-bit phase error has occurred if the three bits of the other are 001, a 2-bit phase error has occurred if the three bits of the other are 011, and a 3-bit phase error has occurred if the three bits of the other are 111.

The synchronization signal 3 having a period of 7 does not allow detection of a phase error of 7 or more bits. Thus, it is preferred that possible phase errors between the data 1a and 1b, the synchronization loss between which is to be detected, are examined in advance, and synchronization signals 3 having a sufficiently long period for those phase errors is used. The synchronization signal shift register 21 also preferably has a sufficiently large number of stages to detect the possible phase errors between the synchronization signals 3 used.

The synchronization adjusting comparison circuit 30 is informed of the detected phase error as a synchronization adjustment signal 5. The synchronization adjustment signal 5 may be any signal that shows the number of bits of the phase error, such as a selection control signal for a multiplexer 32 that is shifted by the number of bits of the phase error.

The synchronization adjusting comparison circuit 30 comprises a comparison shift register 31 and a multiplexer 32 for each data source and an exclusive-OR circuit 33 that compares the data 1a and 1b from the data sources.

The comparison shift register 31 stores the data 1a or 1b input from the associated data source. A four-stage shift register cannot adjust a phase error of 4 or more bits. Thus, it is preferred that possible phase errors between the data 1a and 1b are examined in advance, and comparison shift registers 31 having a sufficiently large number of stages are provided.

The multiplexer 32 selects from among the data stored in the comparison shift register 31 based on the synchronization adjustment signal 5 input from the synchronization loss detecting circuit 20 and outputs the selected data, and the exclusive-OR circuit 33 compares the data 1a and 1b and outputs a data comparison result 2.

As described above, even if the data 1a and 1b sent from a plurality of data sources are not in perfect synchronization with each other, the data comparison apparatus can detect the synchronization loss between the data 1a and 1b and adjust the comparison timing to compare the data 1a and 1b.

### Comparative example 2

A comparative example 2 described below concerns an example of a safety system that has a plurality of CPUs and a data comparison apparatus that can detect a synchronization loss between data sent from the CPUs performing the same data processing and adjust the comparison timing to compare the data.

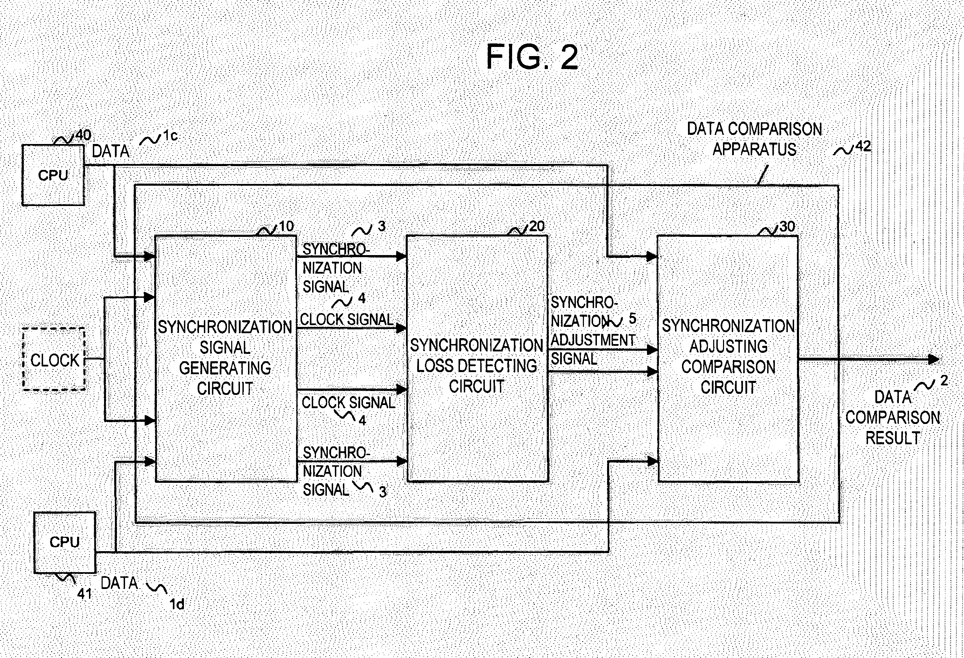

FIG. 2 is a diagram showing a comparative example of a configuration of the safety system that comprises two CPUs and a data comparison apparatus. The safety system according to this comparative example comprises a CPU 40, a CPU 41 and a data comparison apparatus 42. The data comparison apparatus 42 has the same configuration as the data comparison apparatus according to the comparative example 1 described above and comprises the synchronization signal generating circuit 10, the synchronization loss detecting circuit 20 and the synchronization adjusting comparison circuit 30.

In this safety system, the CPUs 40 and 41 first perform the same data processing for the safety system. Data 1c and 1d, which are data processing results output from the CPUs 40 and 41, respectively, are input to the synchronization signal generating circuit 10 and the synchronization adjusting comparison circuit 30 of the data comparison apparatus 42. Then, the data comparison apparatus 42 compares the data 1c and 1d output from the CPUs 40 and 41 that can be out of synchronization through the same operation as in the comparative example 1.

If it is determined that the data compared do not match each other and thus an error has occurred in the data processing because of a fault (a trouble or a problem) of any of the CPUs, the safety system can ensure the system safety by stopping the CPU through an interruption processing, cutting off the power supply or shutting down the external interface.

Alternatively, the safety system according to this embodiment can be configured to make the CPUs 40 and 41 operate on different clocks to ensure higher safety than in the case where the CPUs 40 and 41 operate on the same clock.

More specifically, if a fault occurs in the clock when the CPUs 40 and 41 operate on the same clock, the output data may not go out of synchronization if the processing speeds of both CPUs decrease in the same rate. Therefore, the fault cannot be detected by data comparison.

On the other hand, if a fault occurs in one of the clocks when the CPUs 40 and 41 operate on different clocks, the data 1c and 1d deviate from each other beyond a supposed allowable range, and the data comparison shows that the data 1c and 1d do not match each other, so that the fault can be detected. If both the clocks normally operate, the phase error between the data 1c and 1d falls within the supposed allowable range, and the data comparison shows that the data 1c and 1d match each other.

Alternatively, the safety system according to this embodiment can be configured to have CPUs 40 and 41 of different types to ensure higher safety than in the case where the CPUs 40 and 41 are of the same type.

More specifically, if there is a systematic fault in the CPUs of the same type, both the CPUs perform an erroneous processing and output erroneous data, so that the fault cannot be detected by comparison of the data 1c and 1d. On the other hand, if the CPUs are of different types, there is an extremely low possibility that there is a fault that causes both the CPUs to perform the same erroneous processing and output the same erroneous data.

Therefore, if a systematic fault causes one of the CPUs to output erroneous data, the probability that the erroneous output data differs from the data output from the other CPU is extremely high. In this case, the data comparison shows that the data 1c and 1d do not match each other, so that the fault can be detected.

As described above, the safety system can adjust the comparison timing to compare data that are output from a plurality of CPUs performing the same data processing and can be out of synchronization.

Furthermore, if the safety system is configured so that the two CPUs operate on different clocks or the two CPUs are of different types, the safety system can ensure higher safety.than conventional safety systems that are. configured so that two CPUs of the same type operate on one clock.

### Embodiment 1

An embodiment 1 described below concerns an example of a safety system that incorporates a data comparison apparatus that can not only detect a synchronization loss between data sent from a plurality of CPUs and adjust the comparison timing to compare the data but also prevent latency of a failure in the apparatus.

The safety system according to this embodiment is an example of the safety system according to the comparative example 2 that further comprises an orthogonal waveform generating circuit 34, an orthogonal waveform generating circuit 35, an exclusive-OR circuit 36 and an exclusive-OR circuit 37 provided between the multiplexer 32 and the exclusive-OR circuit 33 in the synchronization adjusting comparison circuit 30, and can output a specific signal that changes level at regular intervals when data 1c and 1d sent from a plurality of CPUs match each other to prevent latency of a failure that fixes the data comparison result 2 at "matched" for a long time because of a failure of a semiconductor device or a fault contact due to poor wiring insulation in the data comparison apparatus 42.

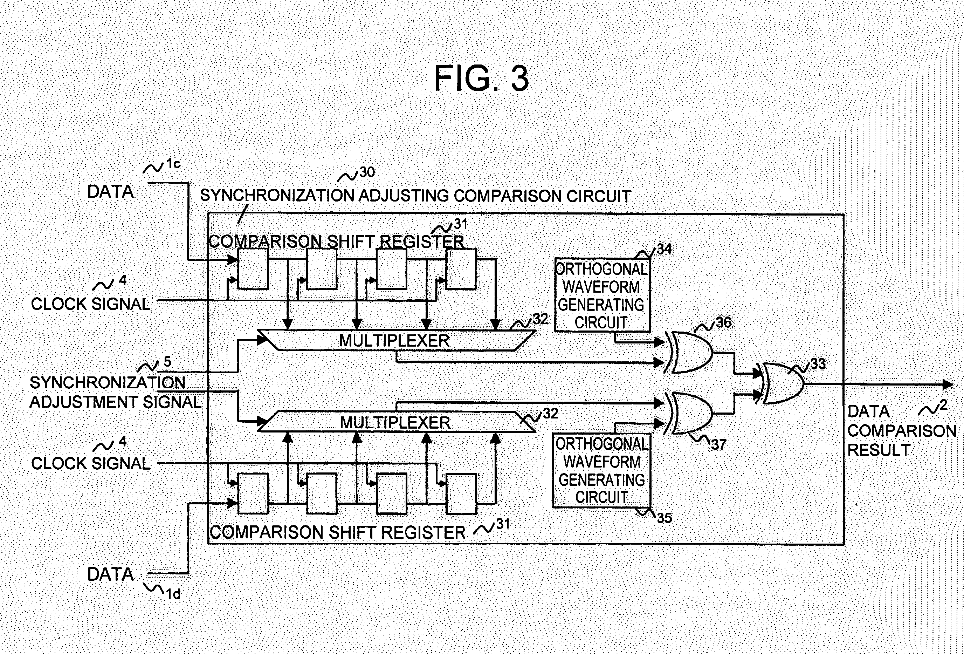

FIG. 3 is a diagram showing an example of a configuration of a synchronization adjusting comparison circuit 30 of the safety system according to this embodiment. The configuration and operation of the synchronization signal generating circuit 10 and the synchronization loss detecting circuit 20 that form the front half of the synchronization adjusting comparison circuit 30 are the same as those in the comparative example 1.

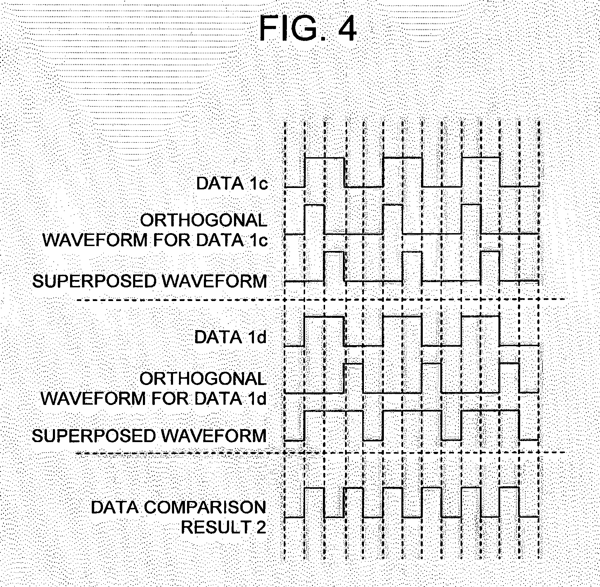

First, the orthogonal waveform generating circuits 34 and 35 generate orthogonal waveforms that are not related with each other. Then, the exclusive-OR circuits 36 and 37 superpose the orthogonal waveforms generated by the respective associated orthogonal waveform generating circuits on the data selected and output from the respective associated multiplexers 32. Finally, the exclusive-OR circuit 33 compares the data on which the orthogonal waveforms are superposed. If the comparison shows that the data 1c and 1d sent from the plurality of data sources match each other, a specific data comparison result 2 whose signal level changes at regular intervals is output. The orthogonal waveform can be any orthogonal waveform and can be generated according to an orthogonal function having an orthogonality, such as a trigonometric function, the Walsh-Hadamard function, the M-sequence and the Wavelet. FIG. 4 shows an example of the orthogonal waveforms and the data comparison result 2.

As described above, the safety system according to the present invention can not only adjust the comparison timing to compare data that are sent from a plurality of CPUs performing the same data processing and can be out of synchronization but also prevent latency of a failure that fixes the comparison result at a state that means "matched".

### Embodiment 2

According to an embodiment 2, the circuit logic of the data comparison apparatus 42 is described using a hardware description language and implemented in a field programmable gate array (FPGA).

The advance of technological innovation in the semiconductor field is so fast that new technologies appear before the product lifetime of the safety system used in the field of railroad engineering or the like expires. Therefore, the electronic circuits used in the safety system have to be ready for improvements or abandonment of electronic components. If an essential component of the circuit becomes unavailable, the circuit using a new component has to be redesigned. In the case that the completely compatible component with the convention is unavailable, redesigning the circuit requires extremely high cost.

However, the FPGA is an integrated circuit that can implement any logic circuit using a hardware description language, and once a circuit logic is described in a hardware description language, the circuit logic can be implemented in various.kinds of FPGAs.

Therefore, the safety system according to this embodiment does not require redesign even if electronic components are improved or abandoned as a result of the advance of the semiconductor technology. Once the circuit logic of the data comparison apparatus 42 is described in a hardware description language, the circuit logic can be implemented at any time in future in any FPGA available at that time, so that the product lineup can be maintained for a long time at low cost.

The present invention is not limited to the embodiments described above and can include various modifications. The embodiments described in detail above are intended to facilitate understanding of the present invention, and all the components described above are not necessarily essential.

For example, some or all of the data sources or clocks may be included in the data comparison apparatus or safety system according to the present invention. Furthermore, the synchronization signal generating circuit, the synchronization loss detecting circuit and the synchronization adjusting comparison circuit may be implemented on different chips, or some or all of these circuits may be implemented on the same chip.

## Claims

1. A data comparison apparatus, comprising:
a synchronization signal generating circuit (10) that generates a synchronization signal (3) based on data (1a, 1b) sent from a plurality of data sources (40, 41);
a synchronization loss detecting circuit (20) that generates a synchronization adjustment signal (5) based on the synchronization signal; and
a synchronization adjusting comparison circuit (30) that adjusts a comparison timing based on the synchronization adjustment signal to compare the data,
**characterized in that**:
the synchronization adjusting comparison circuit comprises, for each data source, a plurality of comparison shift registers (31) that are associated with a respective data source and store the data sent from the respective data source, a multiplexer (32) that selects data to be output based on the synchronization adjustment signal input from the synchronization loss detecting circuit,
the synchronization adjusting comparison circuit further comprises a plurality of orthogonal waveform generating circuits (34, 35) which generate orthogonal waveforms that are not related with each other, and a plurality of first exclusive-OR circuits (36, 37) which superpose the orthogonal waveforms on the data outputted from the multiplexer, and
the synchronization adjusting comparison circuit further comprises a second exclusive-OR circuit (33) that compares the data from the first exclusive-OR circuits,
whereby the data comparison apparatus outputs a specific signal (2) that changes level at regular intervals when the data sent from the plurality of data sources match each other.

2. The data comparison apparatus according to claim 1, wherein the synchronization signal generating circuit comprises a plurality of synchronization trigger detecting parts (11) that are associated with the plurality of data sources and detect that a particular bit string is input from the plurality of data sources, and a plurality of synchronization signal generating parts (12) that are associated with the plurality of data sources and are triggered by detection of the particular bit string to generate the synchronization signal.

3. The data comparison apparatus according to claim 1 or 2, wherein the synchronization loss detecting circuit comprises a plurality of synchronization signal shift registers (21) that are associated with the plurality of data sources and store the synchronization signal input from the synchronization signal generating circuit and a synchronization loss detecting part (22) that detects a synchronization loss by comparing the stored synchronization signals in terms of specific characteristics of the synchronization signals and generates the synchronization adjustment signal.

4. The data comparison apparatus according to any one of the previous claims, wherein the plurality of data sources operate on different clocks.

5. The data comparison apparatus according to any one of the previous claims, wherein the plurality of data sources have CPUs of different types.

6. A safety system, comprising:
a plurality of CPUs (40, 41); and
a data comparison apparatus,
wherein the plurality of CPUs perform the same data processing, the data comparison apparatus comprises a synchronization signal generating circuit (10) that generates a synchronization signal (3) based on data (1a, 1b) sent from the plurality of CPUs, a synchronization loss detecting circuit (20) that generates a synchronization adjustment signal (5) based on the synchronization signal, and a synchronization adjusting comparison circuit (30) that adjusts a comparison timing based on the synchronization adjustment signal to compare the data,
**characterized in that**:
the synchronization adjusting comparison circuit comprises, for each data source, a plurality of comparison shift registers (31) that are associated with a respective data source and store the data sent from the respective data source, a multiplexer (32) that selects data to be output based on the synchronization adjustment signal input from the synchronization loss detecting circuit,
the synchronization adjusting comparison circuit further comprises a plurality of orthogonal waveform generating circuits (34, 35) which generate orthogonal waveforms that are not related with each other, and a plurality of first exclusive-OR circuits (36, 37) which superpose the orthogonal waveforms on the data outputted from the multiplexer, and
the synchronization adjusting comparison circuit further comprises a second exclusive-OR circuit (33) that compares the data from the first exclusive-OR circuits,
whereby the data comparison apparatus outputs a specific signal (2) that changes level at regular intervals when the data sent from the plurality of data sources match each other.

7. The safety system according to claim 6, wherein the plurality of CPUs operate on different clocks, and when a failure occurs in any of the clocks, the safety system can detect the failure by the synchronization adjusting comparison circuit in the data comparison apparatus comparing the data sent from the plurality of CPUs.

8. The safety system according to claim 6 or 7, wherein the plurality of CPUs are two CPUs of different types, and when there is a failure in one of the CPUs, the safety system can detect the failure by the synchronization adjusting comparison circuit in the data comparison apparatus comparing the data sent from the two CPUs.

9. The safety system according to any one of claims 6 to 8, wherein the synchronization signal generating circuit comprises a plurality of synchronization trigger detecting parts (11) that are associated with the plurality of CPUs and detect that a particular bit string is input from the plurality of CPUs, and a plurality of synchronization signal generating parts (12) that are associated with the plurality of CPUs and are triggered by detection of the particular bit string to generate the synchronization signal.

10. The safety system according to any one of claims 6 to 9, wherein the synchronization loss detecting circuit comprises a plurality of synchronization signal shift registers (21) that are associated with the plurality of CPUs and store the synchronization signal input from the synchronization signal generating circuit and a synchronization loss detecting part (22) that detects a synchronization loss by comparing the stored synchronization signals in terms of specific characteristics of the synchronization signals and generates the synchronization adjustment signal.

11. The safety system according to any one of claims 6 to 10, wherein the data comparison apparatus is implemented in a FPGA.

12. A data comparison method specially adapted for carrying out the data comparison apparatus according to claim 1, comprising:
a step of generating a synchronization signal (3) based on data (1a, 1b) sent from a plurality of data sources (40, 41);
a step of generating a synchronization adjustment signal (5) based on the synchronization signal;
a step of adjusting a comparison timing based on the synchronization adjustment signal to compare the data;
a step of storing the data sent from the plurality of data sources;
a step of selecting data to be output based on the synchronization adjustment signal;
a step of comparing the data; and
a step of outputting a specific signal that changes level at regular intervals when the data sent from the plurality of data sources match each other.

13. The data comparison method according to claim 12, further comprising:
a step of detecting that a particular bit string is input from the plurality of data sources; and
a step of being triggered by detection of the particular bit string to generate the synchronization signal.

14. The data comparison method according to claim 12 or 13, further comprising:
a step of storing the synchronization signal; and
a step of detecting a synchronization loss by comparing the stored synchronization signals in terms of specific characteristics of the synchronization signals and generating the synchronization adjustment signal.

15. The data comparison method according to any one of claims 12 to 14, further comprising:
a step of operating the data sources on different clocks.

16. The data comparison method according to any one of claims 12 to 15, wherein the plurality of data sources have CPUs of different types.

## Patentansprüche

1. Datenvergleichsvorrichtung, umfassend:
eine Synchronisationssignal-Erzeugungsschaltung (10), die ein Synchronisationssignal (3) erzeugt, das auf von mehreren Datenquellen (40, 41) gesendeten Daten (1a, 1b) basiert;
eine Synchronisationsverlust-Erfassungsschaltung (20), die ein Synchronisationseinstellsignal (5) anhand des Synchronisationssignals erzeugt; und
eine Synchronisationseinstell-Vergleichsschaltung (30), die ein Vergleichstiming anhand des Synchronisationseinstellsignals einstellt, um die Daten zu vergleichen,
**dadurch gekennzeichnet, dass**:
die Synchronisationseinstell-Vergleichsschaltung für jede Datenquelle mehrere Vergleichsschieberegister (31), die mit einer jeweiligen Datenquelle verknüpft sind und die von der jeweiligen Datenquelle gesendeten Daten speichern, und einen Multiplexer (32) umfasst, der auszugebende Daten anhand des von der Synchronisationsverlust-Erfassungsschaltung eingegebenen Synchronisationseinstellsignals auswählt,
die Synchronisationseinstell-Vergleichsschaltung ferner mehrere orthogonale Wellenformerzeugungsschaltungen (34, 35), die nicht miteinander in Beziehung stehende orthogonale Wellenformen erzeugen, und mehrere erste Exklusiv-Oder-Schaltungen (36, 37) umfasst, die die orthogonalen Wellenformen auf die von dem Multiplexer ausgegebenen Daten überlagern, und
die Synchronisationseinstell-Vergleichsschaltung ferner eine zweite Exklusiv-Oder-Schaltung (33) umfasst, die die Daten von den ersten Exklusiv-Oder-Schaltungen vergleicht,
wobei die Datenvergleichsvorrichtung ein spezifisches Signal (2) ausgibt, das einen Pegel in regelmäßigen Abständen ändert, wenn die von den mehreren Datenquellen gesendeten Daten miteinander übereinstimmen.

2. Datenvergleichsvorrichtung nach Anspruch 1, wobei die Synchronisationsignal-Erzeugungsschaltung mehrere Synchronisationsauslöse-Erfassungsabschnitte (11), die mit den mehreren Datenquellen verknüpft sind und erfassen, dass eine bestimmte Bitfolge von den mehreren Datenquellen eingegeben wird, und mehrere Synchronisationssignal-Erzeugungsabschnitte (12) umfasst, die mit den mehreren Datenquellen verknüpft sind und durch Erfassen der bestimmten Bitfolge ausgelöst werden, um das Synchronisationssignal erzeugen.

3. Datenvergleichsvorrichtung nach Anspruch 1 oder 2, wobei die Synchronisationsverlust-Erfassungsschaltung mehrere Synchronisationssignal-Schieberegister (21), die mit den mehreren Datenquellen verknüpft sind und die Synchronisationssignaleingabe von der Synchronisationssignal-Erzeugungsschaltung speichern, und einen Synchronisationsverlust-Erfassungsabschnitt (22) umfasst, der einen Synchronisationsverlust durch Vergleichen der gespeicherten Synchronisationssignale hinsichtlich spezifischer Charakteristika der Synchronisationssignale erfasst und das Synchronisationseinstellsignal erzeugt.

4. Datenvergleichsvorrichtung nach einem der vorhergehenden Ansprüche, wobei die mehreren Datenquellen auf verschiedenen Takten arbeiten.

5. Datenvergleichsvorrichtung nach einem der vorhergehenden Ansprüche, wobei die mehreren Datenquellen CPUs verschiedener Typen aufweisen.

6. Sicherheitssystem, umfassend:
mehrere CPUs (40, 41); und
eine Datenvergleichsvorrichtung,
wobei die mehreren CPUs die gleiche Datenverarbeitung durchführen, die Datenvergleichsvorrichtung eine Synchronisationssignal-Erzeugungsschaltung (10), die ein Synchronisationssignal (3) erzeugt, das auf von den mehreren CPUs gesendeten Daten (1a, 1b) basiert, eine Synchronisationsverlust-Erfassungsschaltung (20), die ein Synchronisationseinstellsignal (5) anhand des Synchronisationssignals erzeugt, und eine Synchronisationseinstell-Vergleichsschaltung (30) umfasst, die ein Vergleichstiming anhand des Synchronisationseinstellsignals einstellt, um die Daten zu vergleichen,
**dadurch gekennzeichnet, dass**:
die Synchronisationseinstell-Vergleichsschaltung für jede Datenquelle mehrere Vergleichsschieberegister (31), die mit einer jeweiligen Datenquelle verknüpft sind und die von der jeweiligen Datenquelle gesendeten Daten speichert, und einen Multiplexer (32) umfasst, der auszugebende Daten anhand des von der Synchronisationsverlust-Erfassungsschaltung eingegebenen Synchronisationseinstellsignals auswählt,
die Synchronisationseinstell-Vergleichsschaltung ferner mehrere orthogonale Wellenformerzeugungsschaltungen (34, 35), die nicht miteinander in Beziehung stehende orthogonale Wellenformen erzeugen, und mehrere erste Exklusiv-Oder-Schaltungen (36, 37) umfasst, die die orthogonalen Wellenformen auf die von dem Multiplexer ausgegebenen Daten überlagern, und
die Synchronisationseinstell-Vergleichsschaltung ferner eine zweite Exklusiv-Oder-Schaltung (33) umfasst, die die Daten von den ersten Exklusiv-Oder-Schaltungen vergleicht,
wobei die Datenvergleichsvorrichtung ein spezifisches Signal ausgibt, das einen Pegel in regelmäßigen Abständen ändert, wenn die von den mehreren Datenquellen gesendeten Daten miteinander übereinstimmen.

7. Sicherheitssystem nach Anspruch 6, wobei die mehreren CPUs auf verschiedenen Takten arbeiten, und wenn in einem der Takte ein Fehler auftritt, das Sicherheitssystem den Fehler durch die Synchronisationseinstell-Vergleichsschaltung in der Datenvergleichsvorrichtung, die die von den mehreren CPUs gesendeten Daten vergleicht, erfassen kann.

8. Sicherheitssystem nach Anspruch 6 oder 7, wobei die mehreren CPUs zwei CPUs verschiedenen Typs sind, und wenn einen Fehler in einem der CPUs gibt, das Sicherheitssystem den Fehler durch die Synchronisationseinstell-Vergleichsschaltung in der Datenvergleichsvorrichtung, die die von den zwei CPUs gesendeten Daten vergleicht, erfassen kann.

9. Sicherheitssystem nach einem der Ansprüche 6 bis 8, wobei die Synchronisationssignal-Erzeugungsschaltung mehrere Synchronisationsauslöse-Erfassungsabschnitte (11), die mit den mehreren CPUs verknüpft sind und erfassen, dass eine bestimmte Bitfolge von den mehreren CPUs eingegeben wird, und mehrere Synchronisationssignal-Erzeugungsabschnitte (12) umfasst, die mit den mehreren CPUs verknüpft sind und durch Erfassen der bestimmten Bitfolge ausgelöst werden, um das Synchronisationssignal zu erzeugen.

10. Sicherheitssystem nach einem der Ansprüche 6 bis 9, wobei die Synchronisationsverlust-Erfassungsschaltung mehrere Synchronisationssignal-Schieberegister (21), die mit den mehreren CPUs verknüpft sind und das von der Synchronisationssignal-Erzeugungsschaltung eingegebene Synchronisationssignal speichern, und einen Synchronisationsverlust-Erfassungsabschnitt (22) umfasst, der einen Synchronisationsverlust durch Vergleichen der gespeicherten Synchronisationssignale hinsichtlich spezifischer Charakteristika der Synchronisationssignale erfasst und das Synchronisationseinstellsignal erzeugt.

11. Sicherheitssystem nach einem der Ansprüche 6 bis 10, wobei die Datenvergleichsvorrichtung in ein FPGA implementiert ist.

12. Datenvergleichsverfahren, das speziell dazu ausgelegt ist, die Datenvergleichsvorrichtung nach Anspruch 1 auszuführen, umfassend die Schritte:
Erzeugen eines Synchronisationssignals (3), das auf von mehreren Datenquellen (40, 41) gesendeten Daten (1a, 1b) basiert;
Erzeugen eines Synchronisationseinstellsignals (5) anhand des Synchronisationssignals;
Einstellen eines Vergleichstimings anhand des Synchronisationseinstellsignals, um die Daten zu vergleichen;
Speichern der von den mehreren Datenquellen gesendeten Daten;
Auswählen der auszugebenden Daten anhand des Synchronisationseinstellsignals;
Vergleichen der Daten; und
Ausgeben eines spezifischen Signals, das einen Pegel in regelmäßigen Abständen ändert, wenn die von den mehreren Datenquellen gesendeten Daten miteinander übereinstimmen.

13. Datenvergleichsverfahren nach Anspruch 12, ferner umfassend:
einen Schritt zum Erfassen, dass eine bestimmte Bitfolge von den mehreren Datenquellen eingegeben wird; und
einen Schritt, in dem durch Erfassen der bestimmten Bitfolge, ein Erzeugen des Synchronisationssignals ausgelöst wird.

14. Datenvergleichsverfahren nach Anspruch 12 oder 13, ferner umfassend die Schritte:
Speichern des Synchronisationssignals; und
Erfassen eines Synchronisationsverlusts durch Vergleichen der gespeicherten Synchronisationssignale hinsichtlich spezifischer Charakteristika der Synchronisationssignale und Erzeugen des Synchronisationseinstellsignals.

15. Datenvergleichsverfahren nach einem der Ansprüche 12 bis 14, ferner umfassend den Schritt:
Betreiben der Datenquellen auf verschiedenen Takten.

16. Datenvergleichsverfahren nach einem der Ansprüche 12 bis 15, wobei die mehreren Datenquellen CPUs verschiedener Typen aufweisen.

## Revendications

1. Appareil de comparaison de données, comportuant :
un circuit de génération de signal de synchronisation (10) qui génère un signal de synchronisation (3) sur la base de données (la, 1b) envoyées depuis une pluralité de sources de données (40, 41),
un circuit de détection de perte de synchronisation (20) qui génère un signal de réglage de synchronisation (5) sur la base du signal de synchronisation, et
un circuit de comparaison de réglage de synchronisation (30) qui règle un cadencement de comparaison sur la base du signal de réglage de synchronisation afin de comparer les données,
**caractérisé en ce que** :
le circuit de comparaison de réglage de synchronisation comporte, pour chaque source de données, une pluralité de registres à décalage de comparaison (31) qui sont associés à une source de données respective et mémorisent les données envoyées par la source de données respective, un multiplexeur (32) qui sélectionne des données à délivrer en sortie sur la base du signal de réglage de synchronisation entré depuis le circuit de détection de perte de synchronisation,
le circuit de comparaison de réglage de synchronisation comporte en outre une pluralité de circuits de génération de forme d'onde orthogonale (34, 35) qui génèrent des formes d'onde orthogonale qui ne sont pas liées les unes aux autres, et une pluralité de premiers circuits OU-exclusif (36, 37) qui superposent les formes d'onde orthogonale sur les données délivrées en sortie par le multiplexeur, et
le circuit de comparaison de réglage de synchronisation comporte en outre un second circuit OU-exclusif (33) qui compare les données en provenance des premiers circuits OU-exclusif,
dans lequel l'appareil de comparaison de données délivre en sortie un signal spécifique (2) qui change de niveau à des intervalles réguliers lorsque les données envoyées par la pluralité de sources de données correspondent entre elles.

2. Appareil de comparaison de données selon la revendication 1, dans lequel le circuit de génération de signal de synchronisation comporte une pluralité de parties de détection de déclenchement de synchronisation (11) qui sont associées à la pluralité de sources de données et détectent qu'une chaîne binaire particulière est entrée depuis la pluralité de sources de données, et une pluralité de parties de génération de signal de synchronisation (12) qui sont associées à la pluralité de sources de données et sont déclenchées par détection de la chaîne binaire particulière afin de générer le signal de synchronisation.

3. Appareil de comparaison de données selon la revendication 1 ou 2, dans lequel le circuit de détection de perte de synchronisation comporte une pluralité de registres à décalage de signal de synchronisation (21) qui sont associés à la pluralité de sources de données et mémorisent le signal de synchronisation entré depuis le circuit de génération de signal de synchronisation et une partie de détection de perte de synchronisation (22) qui détecte une perte de synchronisation en comparant les signaux de synchronisation mémorisés en termes de caractéristiques spécifiques des signaux de synchronisation et génère le signal de réglage de synchronisation.

4. Appareil de comparaison de données selon l'une quelconque des revendications précédentes, dans lequel la pluralité de sources de données opèrent sur différentes horloges.

5. Appareil de comparaison de données selon l'une quelconque des revendications précédentes, dans lequel la pluralité de sources de données ont des unités centrales de traitement (CPU) de différents types.

6. Système de sécurité, comportant :
une pluralité d'unités centrales de traitement (40, 41), et
un appareil de comparaison de données,
dans lequel la pluralité d'unités centrales de traitement exécutent le même traitement de données, l'appareil de comparaison de données comporte un circuit de génération de signal de synchronisation (10) qui génère un signal de synchronisation (3) sur la base des données (la, 1b) envoyées par la pluralité d'unités centrales de traitement, un circuit de détection de perte de synchronisation (20) qui génère un signal de réglage de synchronisation (5) sur la base du signal de synchronisation, et un circuit de comparaison de réglage de synchronisation (30) qui règle un cadencement de comparaison sur la base du signal de réglage de synchronisation afin de comparer les données,
**caractérisé en ce que** :
le circuit de comparaison de réglage de synchronisation comporte, pour chaque source de données, une pluralité de registres à décalage de comparaison (31) qui sont associés à une source de données respective et mémorisent les données envoyées par la source de données respective, un multiplexeur (32) qui sélectionne des données à délivrer en sortie sur la base du signal de réglage de synchronisation entré depuis le circuit de détection de perte de synchronisation,
le circuit de comparaison de réglage de synchronisation comporte en outre une pluralité de circuits de génération de forme d'onde orthogonale (34, 35) qui génèrent des formes d'onde orthogonale qui ne sont pas liées les unes aux autres, et une pluralité de premiers circuits OU-exclusif (36, 37) qui superposent les formes d'onde orthogonale sur les données délivrées en sortie par le multiplexeur, et
le circuit de comparaison de réglage de synchronisation comporte en outre un second circuit OU-exclusif (33) qui compare les données en provenance des premiers circuits OU-exclusif,
dans lequel l'appareil de comparaison de données délivre en sortie un signal spécifique (2) qui change de niveau à des intervalles réguliers lorsque les données envoyées par la pluralité de sources de données correspondent entre elles.

7. Système de sécurité selon la revendication 6, dans lequel la pluralité d'unités centrales de traitement fonctionnent sur différentes horloges, et lorsqu'une défaillance survient dans l'une quelconque des horloges, le système de sécurité peut détecter la défaillance par l'intermédiaire du circuit de comparaison de réglage de synchronisation dans l'appareil de comparaison de données qui compare les données envoyées par la pluralité d'unités centrales de traitement.

8. Système de sécurité selon la revendication 6 ou 7, dans lequel la pluralité d'unités centrales de traitement sont constituées de deux unités centrales de traitement de différents types, et lorsqu'une défaillance survient dans l'une des unités centrales de traitement, le système de sécurité peut détecter la défaillance par l'intermédiaire du circuit de comparaison de réglage de synchronisation dans l'appareil de comparaison de données qui compare les données envoyées par les deux unités centrales de traitement.

9. Système de sécurité selon l'une quelconque des revendications 6 à 8, dans lequel le circuit de génération de signal de synchronisation comporte une pluralité de parties de détection à déclenchement de synchronisation (11) qui sont associées à la pluralité d'unités centrales de traitement et détectent qu'une chaîne binaire particulière est entrée depuis la pluralité d'unités centrales de traitement, et une pluralité de parties de génération de signaux de synchronisation (12) qui sont associées à la pluralité d'unités centrales de traitement et sont déclenchées par détection de la chaîne binaire particulière pour générer le signal de synchronisation.

10. Système de sécurité selon l'une quelconque des revendications 6 à 9, dans lequel le circuit de détection de paire de synchronisation comporte une pluralité de registres à décalage de signal de synchronisation (21) qui sont associés à la pluralité d'unités centrales de traitement et mémorisent le signal de synchronisation entré par le circuit de génération de signal de synchronisation et une partie de détection de perte de synchronisation (22) qui détecte une perte de synchronisation en comparant les signaux de synchronisation mémorisés en termes de caractéristiques spécifiques des signaux de synchronisation et génère le signal de réglage de synchronisation.

11. Système de sécurité selon l'une quelconque des revendications 6 à 10, dans lequel l'appareil de comparaison de données est mis en oeuvre dans un réseau prédiffusé programmable par l'utilisateur (FPGA).

12. Procédé de comparaison de données spécialement adapté pour mettre en fonctionnement l'appareil de comparaison de données selon la revendication 1 comportant :
une étape de génération d'un signal de synchronisation (3) sur la base de données (la, 1b) envoyées par une pluralité de sources de données (40, 41),
une étape de génération d'un signal de réglage de synchronisation (5) sur la base du signal de synchronisation,
une étape de réglage d'un cadencement de comparaison sur la base du signal de réglage de synchronisation pour comparer les données,
une étape de mémorisation des données envoyées par la pluralité de sources de données,
une étape de sélection de données à délivrer en sortie sur la base du signal de réglage de synchronisation,
une étape de comparaison des données, et
une étape consistant à délivrer en sortie un signal spécifique qui change de niveau à des intervalles réguliers lorsque les données envoyées par la pluralité de sources de données correspondent entre elles.

13. Procédé de comparaison de données selon la revendication 12, comportant en outre :
une étape de détection qu'une chaîne binaire particulière est entrée depuis la pluralité de sources de données, et
une étape de déclenchement par détection de la chaîne binaire particulière pour générer le signal de synchronisation.

14. Procédé de comparaison de données selon la revendication 12 ou 13, comportant en outre :
un état de mémorisation du signal de synchronisation, et
un état de détection d'une perte de synchronisation en comparant les signaux de synchronisation mémorisés en termes de caractéristiques spécifiques des signaux de synchronisation et en générant le signal de réglage de synchronisation.

15. Procédé de comparaison de données selon l'une quelconque des revendications 12 à 14, comportant en outre :
une étape d'actionnement des sources de données sur différentes horloges.

16. Procédé de comparaison de données selon l'une quelconque des revendications 12 à 15, dans lequel la pluralité de sources de données ont des unités centrales de traitement de différents types.
